(19) Europäisches Patentamt / European Patent Office / Office européen des brevets

(11) **EP 4 286 539 A1**

(12) **EUROPEAN PATENT APPLICATION**
published in accordance with Art. 153(4) EPC

(43) Date of publication:
**06.12.2023 Bulletin 2023/49**

(21) Application number: **21933307.7**

(22) Date of filing: **27.12.2021**

(51) International Patent Classification (IPC):
**C21B 7/24** $^{(2006.01)}$  **F27D 21/00** $^{(2006.01)}$
**G01F 23/22** $^{(2006.01)}$

(52) Cooperative Patent Classification (CPC):
**C21B 7/24; F27D 21/00; G01F 23/22**

(86) International application number:
**PCT/JP2021/048557**

(87) International publication number:
**WO 2022/201717 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.03.2021 JP 2021048716**

(71) Applicant: **JFE Steel Corporation**
**Tokyo 100-0011 (JP)**

(72) Inventors:
• **MORIYA, Kota**
**Tokyo 100-0011 (JP)**
• **MATSUNAGA, Ryotaro**
**Tokyo 100-0011 (JP)**
• **ICHIKAWA, Kazuhira**
**Tokyo 100-0011 (JP)**

(74) Representative: **Hoffmann Eitle**
**Patent- und Rechtsanwälte PartmbB**
**Arabellastraße 30**
**81925 München (DE)**

(54) **MOLTEN IRON SLAG HEIGHT DETECTION METHOD AND MOLTEN IRON SLAG HEIGHT DETECTION DEVICE**

(57) Provided is a molten iron slag height detection method that can find a molten iron slag height of a blast furnace without using a device for transmitting a signal to the blast furnace.

The molten iron slag height detection method includes measuring a vibration intensity of a furnace wall of a lower portion of a blast furnace, calculating an intensity in a frequency band correlated with a change in molten iron slag height by frequency analysis of the vibration intensity, and finding a molten iron slag height of the blast furnace by using the calculated intensity in the frequency band.

FIG. 1

EP 4 286 539 A1

**Description**

Technical Field

The present invention relates to a blast furnace molten iron slag height detection method and molten iron slag height detection apparatus.

Background Art

In operation of a blast furnace, main raw materials including iron ore and coke serving as a reductant are alternately charged through a furnace top, and heated air is blown through an air blowing opening called a tuyere located at a lower portion of the furnace. The charged iron ore is melted in the furnace and is reduced to become molten iron, and the molten iron is discharged through a taphole provided at a lower portion of the furnace together with molten slag, which is formed from gangue in the iron ore.

Molten iron and molten slag (hereinafter collectively referred to as "molten iron slag") are always discharged through any of plural tapholes of the blast furnace, which are alternately used. This is because if an amount of molten iron slag accumulated in the blast furnace increases, operation of the blast furnace is negatively influenced. Specific examples of the negative influence include an increase in pressure loss in the furnace, breakage of the tuyere caused by the molten iron slag reaching the height of the tuyere, and failure to blow air caused by reverse flow of the molten iron slag from the tuyere toward a blow pipe. In particular, if a trouble occurs around the tuyere, there is no choice but to sustain blowing down for a long term. This may sometimes lead to a blast furnace hearth chill. Therefore, properly managing a molten iron slag height, which is a molten iron slag liquid level, is very important for stable operation of a blast furnace.

In operation of a blast furnace, a molten iron slag height is managed by calculation of balance between a result of measurement of a weight of molten iron slag (hereinafter referred to as tapped molten iron slag") tapped through a taphole and an amount of generated molten iron slag calculated from an amount of charged raw materials. However, the result of measurement of a weight of tapped molten iron slag can be obtained only in a tapping cycle, specifically, every two to three hours, and therefore information on the molten iron slag height can be obtained only at this time interval. Therefore, obtaining more instantaneous information concerning a molten iron slag height is very important for stable operation of a blast furnace.

As a technique for measuring a molten iron slag height, for example, Patent Literature 1 discloses a technique for detecting a molten iron slag height in a blast furnace on the basis of a reflection echo of an elastic wave emitted from a transmitter provided on a wall of a blast furnace. Furthermore, Patent Literature 2 discloses a technique for measuring a molten iron slag height by applying a signal current from four electrodes provided on a wall of a blast furnace and detecting a response of a voltage to the signal current.

Citation List

Patent Literature

PTL 1: Japanese Unexamined Patent Application Publication No. 10-185654
PTL 2: Japanese Unexamined Patent Application Publication No. 2010-138437

Summary of Invention

Technical Problem

However, according to the techniques disclosed in Patent Literatures 1 and 2, a transmitter that emits an elastic wave or electrodes for applying a signal current are needed in addition to a measurement device that receives a signal from an inside of a furnace. In a lower portion of the blast furnace where molten iron slag is stored, pieces of equipment such as a blow pipe for blowing air, a taphole opener, and a molten iron runner cover manipulator are closely arranged. Furthermore, a body of the lower portion of the blast furnace generates enormous dust and radiation heat during tapping work. Therefore, if an extra device for transmitting a signal is needed in addition to a measurement device, it is difficult to arrange these devices in the lower portion of the blast furnace and do maintenance of the devices. The present invention was accomplished in view of such problems of the conventional arts, and an object of the present invention is to provide a molten iron slag height detection method and a molten iron slag height detection apparatus that can find a molten iron slag height without using a device for transmitting a signal to a blast furnace. Solution to Problem

Means for solving the above problems is as follows.

(1) A molten iron slag height detection method for detecting a molten iron slag height of a blast furnace, the molten iron slag height detection method including: measuring a vibration intensity of a furnace wall of a lower portion of the blast furnace; calculating a vibration intensity in a frequency band correlated with a change in molten iron slag height by frequency analysis of the measured vibration intensity; and finding the molten iron slag height of the blast furnace by using the calculated intensity in the frequency band.

(2) The molten iron slag height detection method according to (1), further including finding a correspondence relationship between the vibration intensity in the frequency band and the molten iron slag height in advance, in which the molten iron slag height of the blast furnace is found by using the calculated vibration intensity in the frequency band and the correspondence relationship.

(3) The molten iron slag height detection method according to (2), in which the correspondence relationship is found every time of blowing down of the blast furnace.

(4) A molten iron slag height detection apparatus for detecting a molten iron slag height of a blast furnace, the molten iron slag height detection apparatus including: a vibration meter that is provided on a furnace wall of a lower portion of the blast furnace and measures a vibration intensity of the furnace wall; and an arithmetic device that calculates a vibration intensity in a predetermined frequency band by frequency analysis of the vibration intensity measured by the vibration meter and calculates the molten iron slag height of the blast furnace by using a correspondence relationship between the vibration intensity in the predetermined frequency band and the molten iron slag height.

Advantageous Effects of Invention

According to the molten iron slag height detection method and the molten iron slag height detection apparatus according to the present invention, a molten iron slag height of a blast furnace is detected by measuring a vibration intensity of vibration emitted by the blast furnace itself during operation. Since the molten iron slag height detection method according to the present invention can thus detect a molten iron slag height of a blast furnace without using a device for transmitting a signal to the blast furnace, it is possible to prevent device arrangement and device maintenance from becoming difficult.

Brief Description of Drawings

[Fig. 1] Fig. 1 is a cross-sectional schematic view of a lower portion of a blast furnace.
[Fig. 2] Fig. 2 is a schematic view illustrating an experimental model used to confirm a relationship between vibration of a furnace wall in the lower portion of the blast furnace and a molten iron slag height.
[Fig. 3] Fig. 3 illustrates a waveform of a vibration intensity appearing in a frequency band of 600 Hz to 1000 Hz.
[Fig. 4] Fig. 4 is a graph illustrating a relationship between a vibration peak intensity and a liquid level.
[Fig. 5] Fig. 5 is a graph illustrating transition of a vibration peak intensity and molten iron slag balance as the number of times of tapping increases.
[Fig. 6] Fig. 6 is a graph illustrating a relationship between a normalized vibration peak intensity and normalized molten iron slag balance.

Description of Embodiments

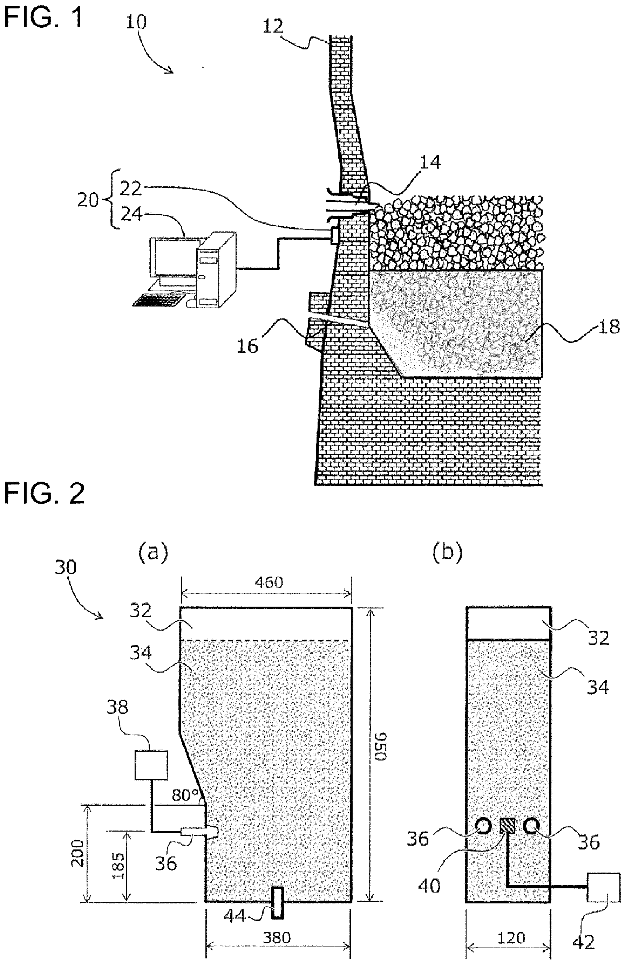

The present invention is described below on the basis of an embodiment of the invention. Fig. 1 is a cross-sectional schematic view of a lower portion of a blast furnace 10. Iron ore and coke, which are raw materials, are alternately charged into a space inside a furnace wall 12 through a furnace top of the blast furnace 10 so as to form layers, and a hot blast, which is oxygen-containing gas, and a reductant such as pulverized coal are blown into the space inside the furnace wall 12 through a tuyere 14 provided in the lower portion of the furnace wall 12. Carbon contained in the coke and the pulverized coal is burned by the oxygen-containing gas blown through the tuyere 14. This generates high-temperature reducing gas. The high-temperature reducing gas melts and reduces the iron ore, and thereby molten iron is produced. The high-temperature reducing gas used to melt and reduce the iron ore is then discharged as furnace top gas through the furnace top. The produced molten iron and molten slag produced as a by-product when the molten iron is produced, which are molten iron slag 18, are accumulated in a furnace bottom portion and is discharged through tapholes 16 provided in the lower portion of the blast furnace 10.

In the lower portion of the blast furnace 10 where the molten iron slag 18 is accumulated, the furnace wall 12 is faintly vibrating due to causes such as a pressure variation of blown air and cooling water, falling of raw materials in the furnace, and collision of coke circling in a raceway at a tip of the tuyere with an inner wall of the furnace wall 12. Among these causes of the vibration, the pressure of blown air and the raceway shape change depending on a fluctuation in height of the molten iron slag 18. The inventors of the present invention focused on vibration in a specific frequency band resulting from a pressure variation of blown air and collision of coke in the raceway with the furnace wall 12, which are influenced by the height of the molten iron slag 18, and found that a change in height of the molten iron slag 18 can be detected by detecting an intensity of the vibration and thus completed the present invention.

According to a molten iron slag height detection method according to the present embodiment, a height of the molten iron slag 18 accumulated in the bottom portion is detected by using a molten iron slag height detection apparatus 20. The molten iron slag height detection apparatus 20 has a vibration meter 22 and an arithmetic device 24. The vibration meter 22 is provided in a hearth portion of the furnace wall 12 in the lower portion, and measures a vibration intensity of the furnace wall 12 and outputs the measured vibration intensity to the arithmetic device 24. The vibration meter 22 is, for example, a piezoelectric element. Note that the vibration meter 22 is not limited to a piezoelectric element, and may measure displacement of the furnace wall 12 by using a laser rangefinder, may electromagnetically measure vibration by using a coil or the like, or may mechanically measure vibration by using a spring or the like. It is however preferable to use a piezoelectric element that can be directly provided on the furnace wall 12 and has a small number of movable parts since the hearth portion of the blast furnace 10 is in a harsh dust environment.

The arithmetic device 24 is a general-purpose computer such as a personal computer that has an arithmetic unit such as a CPU and a storage unit such as a memory. The arithmetic device 24 performs frequency analysis of the vibration intensity acquired from the vibration meter 22 and calculates a vibration intensity in a predetermined frequency band. Furthermore, the arithmetic device 24 stores therein in advance a regression formula representing a correspondence relationship between a vibration intensity in the frequency band and a molten iron slag height, and the arithmetic device 24 finds a molten iron slag height by using the calculated vibration intensity and the regression formula representing the correspondence relationship. In this way, according to the molten iron slag height detection method according to the present embodiment, a molten iron slag height of the blast furnace is detected without using a device for transmitting a signal to the blast furnace 10.

Next, an experiment that confirmed that a molten iron slag height of the blast furnace 10 can be detected by using vibration of the blast furnace 10 is described. Fig. 2 is a schematic view illustrating an experimental model 30 used to confirm a relationship between vibration of the furnace wall 12 in the lower portion of the blast furnace and a molten iron slag height. The experimental model 30 has a container 32, two air blowing tuyeres 36, a liquid inflow hole 44, a piezoelectric element 40, and a data logger 42.

The container 32 is modeled after a part of the lower portion of the blast furnace 10 and is an acrylic container having a height of 950 mm, a depth of 120 mm, an upper end width of 460 mm, and a bottom width of 380 mm. The container 32 is opened on an upper side so that the container 32 can be filled with filling particles 34. The two air blowing tuyeres 36 are provided on a side surface of the container 32 at a height of 185 mm from a bottom surface. The single liquid inflow hole 44 is provided at a center of gravity of the bottom surface of the container 32. A flow regulating valve 38 is provided on an upstream side of each of the air blowing tuyeres 36 so that an amount of air blown through the air blowing tuyeres 36 can be adjusted. The piezoelectric element 40 is disposed between the two air blowing tuyeres 36. A temporal change of a vibration intensity was measured by converting vibration into an electric signal by the piezoelectric element 40 and collecting and recording the electric signal by the data logger 42.

In the experiment, the container 32 was filled with a high-density polyethylene pellet (specific gravity: 0.922) having a diameter of 3.4 mm as the filling particles 34, and the container 32 was filled with water to a predetermined height through the liquid inflow hole 44. In this state, the experiment was conducted by blowing a predetermined amount of air through the air blowing tuyeres 36. Experimental conditions are illustrated in Table 1 below.

[Table 1]

| Experiment No | Presence of filling particles | Total amount of blown air (L/min) | Liquid level (mm) |
|---|---|---|---|
| 1 | Not present | 1442 | 0 |
| 2 | present | 1442 | 0 |
| 3 | present | 1442 | 40 |
| 4 | present | 1442 | 70 |
| 5 | present | 1442 | 100 |
| 6 | present | 1442 | 140 |

An experiment No. 1 in which the container 32 was not filled with the filling particles 34 nor water and experiments No. 2 to No. 6 in which the container 32 was filled with the filling particles 34 and a liquid level was set to five different levels were conducted. As a result of frequency analysis of vibration measured in the experiments, a correlation was observed between a broad peak appearing in a frequency band of 800 Hz to 900 Hz and the presence or absence of the filling particles 34.

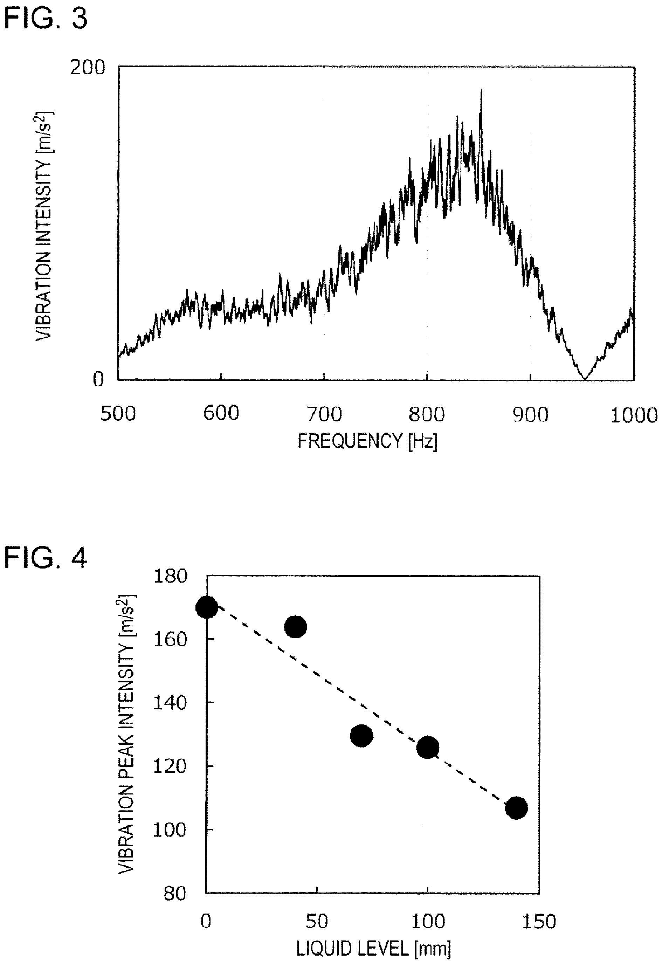

Fig. 3 illustrates a waveform of a vibration intensity appearing in a frequency band of 600 Hz to 1000 Hz. In Fig. 3, the horizontal axis represents a frequency (Hz), and the vertical axis represents a vibration intensity ($m/s^2$). As illustrated in Fig. 3, this waveform has a broad peak in a frequency band of 800 Hz to 900 Hz, and therefore a relationship between a peak intensity of the peak and a liquid level was examined.

Fig. 4 is a graph illustrating a relationship between a vibration peak intensity and a liquid level. In Fig. 4, the horizontal axis represents a liquid level (mm), and the vertical axis represents an intensity ($m/s^2$) of a vibration peak appearing in a frequency band of 800 Hz to 900 Hz. As illustrated in Fig. 4, the intensity of the vibration peak decreased as the liquid level increased, and a linear negative correlation was confirmed between the liquid level and the vibration peak intensity.

A raceway formed in the container 32 during the experiments was observed. As a result, it was found that circling behavior of the filling particles 34 in the raceway changed depending on a change in liquid level, and it was estimated that vibration at 900 Hz is vibration resulting from circling of the filling particles 34 in the raceway. It can be hypothesized that a raceway shape also changed due to the change in liquid level and the circling behavior of the filling particles 34 also changed due to the change in raceway shape accordingly, and as a result the influence of the liquid level appeared in the vibration peak intensity at 900 Hz.

Since the above experiment result was obtained, it was examined whether a molten iron slag height of an actual blast furnace can be detected by using vibration emitted by the blast furnace. A piezoelectric vibration meter was mounted between tuyeres on an outer steel shell of a blast furnace having a 5000 $m^3$ class capacity, and frequency characteristics were analyzed from a measurement result. As a result, a vibration peak having a vertex at a position of a frequency of approximately 900 Hz appeared, and an intensity of the vibration peak and molten iron slag balance were compared. The molten iron slag balance means a value obtained by subtracting an amount of tapped molten iron slag in terms of volume from an amount of generated molten iron slag in terms of volume. Molten iron slag balance "0" means that the amount of generated molten iron slag and the amount of tapped molten iron slag are equal. Positive molten iron slag balance means that the amount of tapped molten iron slag is smaller than the amount of generated molten iron slag, and therefore a molten iron slag height increases. On the other hand, negative molten iron slag balance means that the amount of tapped molten iron slag is larger than the amount of generated molten iron slag, and therefore the molten iron slag height decreases.

The amount of generated molten iron slag was calculated from an oxygen balance of the blast furnace per unit time, a proportion of oxygen contained in iron oxide in raw materials charged through a furnace top, and a proportion of gangue in the charged raw materials. Specifically, an amount of generated molten iron was calculated by using the following formula (1), and an amount of generated molten slag was calculated by using the following formula (2), and an amount of generated molten iron slag was calculated by summing up these amounts.

[Math. 1]

$$W_p = (N_{top} - N_{tuy}) \times (R_{Fe/O}) \times M_{Fe} \div R_{FeHM} \quad \cdots \quad (1)$$

[Math. 2]

$$W_s = W_p \times R_{G/Fe} \quad \cdots \quad (2)$$

In the above formulas (1) and (2), $W_p$ is the amount of generated molten iron (t/time), and $W_s$ is the amount of generated molten slag (t/time). $N_{top}$ is an amount of substance (mol/time) of oxygen atoms in furnace top gas per unit time, $N_{tuy}$ is an amount of substance (mol/time) of oxygen atoms blown through a tuyere per unit time, $R_{Fe/O}$ is an average number (-) of iron atoms per oxygen atom in iron oxide in the raw materials charged through the furnace top, $M_{Fe}$ is a molar mass (t/mol) of iron, $R_{FeHM}$ is a mass fraction (-) of iron in molten iron, and $R_{G/Fe}$ is a mass (t/ molten iron) of charged gangue per 1 t of molten iron. Note that (-) indicates being dimensionless.

$N_{top}$ is found by component analysis of furnace top gas. $N_{tuy}$ is found by component analysis of gas blown through the tuyere. $R_{Fe/O}$ and $R_{G/Fe}$ are found by component analysis of the raw materials charged through the furnace top. $R_{FeHM}$ is found by component analysis of molten iron tapped through a taphole.

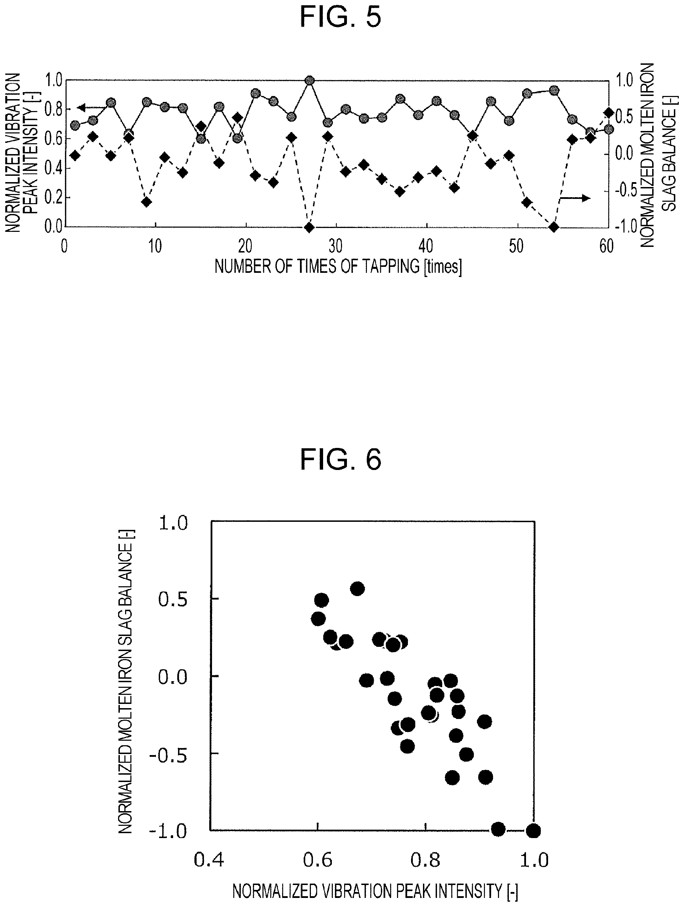

Fig. 5 is a graph illustrating transition of the vibration peak intensity and the molten iron slag balance as the number of times of tapping increases. In Fig. 5, the horizontal axis represents the number of times of tapping (times), the left vertical axis represents a normalized vibration peak intensity (-), and the right vertical axis represents normalized molten iron slag balance (-). The normalized vibration peak intensity and the normalized molten iron slag balance are values normalized by dividing the vibration peak intensity and the molten iron slag balance by maximum absolute values of the vibration peak intensity and the molten iron slag balance in a target period, respectively. As illustrated in Fig. 5, such a negative correlation that the molten iron slag balance becomes negative as the vibration peak intensity increases was confirmed.

Fig. 6 is a graph illustrating a relationship between the normalized vibration peak intensity and the normalized molten iron slag balance. In Fig. 6, the horizontal axis represents the normalized vibration peak intensity (-), and the vertical axis represents the normalized molten iron slag balance (-). As illustrated in Fig. 6, a linear negative correlation similar to that illustrated in Fig. 4 was confirmed between the normalized vibration peak intensity and the normalized molten iron slag balance. That is, it was confirmed that a vibration intensity in a specific frequency band of vibration emitted from a body of a lower portion of the blast furnace had a linear negative correlation with a molten iron slag height.

In view of these results, first, a vibration intensity of a furnace wall of a lower portion of a blast furnace is measured while changing a molten iron slag height of the blast furnace, a frequency band that is correlated with the change in molten iron slag height is specified by frequency analysis of the vibration intensity, and a regression formula representing a correspondence between a vibration intensity in the frequency band and a molten iron slag height is found in advance. Note that since a raceway shape is influenced by a Bosch gas flow rate and a harmonic average grain size and an apparent density of coke, it is preferable to find the regression formula for each of these conditions.

When a molten iron slag height is measured, a vibration intensity in the specified frequency band is measured during operation of a blast furnace, and the molten iron slag height of the blast furnace is found by using the measured vibration intensity and the regression formula found in advance. In this way, the molten iron slag height of the blast furnace can be found without using a device for transmitting a signal to the blast furnace. This prevents device arrangement in a lower portion of the blast furnace and device maintenance from becoming difficult.

The regression formula representing a correspondence between a vibration intensity in the frequency band and a molten iron slag height is preferably found every time of blowing down of the blast furnace. In a case where the molten iron slag balance is used, a change in liquid level of molten iron slag can be grasped, but a molten iron slag height in the blast furnace cannot be grasped. On the other hand, in a case where blowing down of the blast furnace is conducted, molten iron slag is discharged until a predetermined molten iron slag height is reached, and therefore a molten iron slag height can be calculated by calculating molten iron slag balance while using the predetermined molten iron slag height as a reference in operation of the blast furnace after blowing down.

In operation of a blast furnace, a molten iron slag height is calculated as described above, and therefore a regression formula representing a correspondence between a vibration intensity in the frequency band and a molten iron slag height can be found at any time. However, calculation accuracy of a molten iron height calculated from a reference molten iron slag height and molten iron slag balance decreases as blast furnace operation continues from a time when the reference molten iron slag height is found. It is therefore preferable to find a regression formula representing a correspondence between a vibration intensity in the frequency band and a molten iron slag height every time blowing down of a blast furnace is conducted. In this way, high detection accuracy of a molten iron slag height can be maintained.

Reference Signs List

| | |
|---|---|
| 10 | blast furnace |
| 12 | furnace wall |
| 14 | tuyere |
| 16 | taphole |
| 18 | molten iron slag |
| 20 | molten iron slag height detection apparatus |
| 22 | vibration meter |
| 24 | arithmetic device |
| 30 | experimental model |
| 32 | container |
| 34 | filling particles |
| 36 | air blowing tuyere |
| 38 | flow regulating valve |
| 40 | piezoelectric element |
| 42 | data logger |
| 44 | liquid inflow hole |

**Claims**

1. A molten iron slag height detection method for detecting a molten iron slag height of a blast furnace, the molten iron slag height detection method comprising:

   measuring a vibration intensity of a furnace wall of a lower portion of the blast furnace;
   calculating a vibration intensity in a frequency band correlated with a change in molten iron slag height by frequency analysis of the measured vibration intensity; and
   finding the molten iron slag height of the blast furnace by using the calculated intensity in the frequency band.

2. The molten iron slag height detection method according to claim 1, further comprising finding a correspondence relationship between the vibration intensity in the frequency band and the molten iron slag height in advance, wherein the molten iron slag height of the blast furnace is found by using the calculated vibration intensity in the frequency band and the correspondence relationship.

3. The molten iron slag height detection method according to claim 2, wherein
   the correspondence relationship is found every time of blowing down of the blast furnace.

4. A molten iron slag height detection apparatus for detecting a molten iron slag height of a blast furnace, the molten iron slag height detection apparatus comprising:

   a vibration meter that is provided on a furnace wall of a lower portion of the blast furnace and measures a vibration intensity of the furnace wall; and
   an arithmetic device that calculates a vibration intensity in a predetermined frequency band by frequency analysis of the vibration intensity measured by the vibration meter and calculates the molten iron slag height of the blast furnace by using a correspondence relationship between the vibration intensity in the predetermined frequency band and the molten iron slag height.

FIG. 1

FIG. 2

(a)    (b)

# FIG. 3

# FIG. 4

# FIG. 5

# FIG. 6

**INTERNATIONAL SEARCH REPORT**

International application No.

**PCT/JP2021/048557**

**A. CLASSIFICATION OF SUBJECT MATTER**

*C21B 7/24*(2006.01)i; *F27D 21/00*(2006.01)i; *G01F 23/22*(2006.01)i
FI: C21B7/24 305; F27D21/00 A; G01F23/22 H

According to International Patent Classification (IPC) or to both national classification and IPC

**B. FIELDS SEARCHED**

Minimum documentation searched (classification system followed by classification symbols)

C21B7/24; F27D21/00; G01F23/22

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | KR 10-2011-0018150 A (POSCO) 23 February 2011 (2011-02-23) paragraphs [0006], [0016], [0033], [0039], fig. 1 | 1-4 |
| Y | paragraphs [0006], [0016], [0033], [0039], fig. 1 | 1-4 |
| Y | JP 4-066611 A (SUMITOMO METAL INDUSTRIES, LIMITED) 03 March 1992 (1992-03-03) claims, page 2, lower left column, lines 10-14, page 2, lower left column, line 18 to lower right column, line 3, page 2, lower right column, lines 3-7, page 2, lower right column, lines 14-18, page 3, upper left column, lines 12-13, fig. 1-3 | 1-4 |
| A | JP 9-145452 A (KAWASAKI STEEL CORPORATION) 06 June 1997 (1997-06-06) entire text, all drawings | 1-4 |
| A | JP 6-025719 A (NKK CORPORATION) 01 February 1994 (1994-02-01) entire text, all drawings | 1-4 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 March 2022** | **15 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2021/048557**

| Patent document cited in search report | | | Publication date (day/month/year) | Patent family member(s) | Publication date (day/month/year) |
|---|---|---|---|---|---|
| KR | 10-2011-0018150 | A | 23 February 2011 | (Family: none) | |
| JP | 4-066611 | A | 03 March 1992 | (Family: none) | |
| JP | 9-145452 | A | 06 June 1997 | (Family: none) | |
| JP | 6-025719 | A | 01 February 1994 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10185654 A

- JP 2010138437 A